# EUROPEAN PATENT SPECIFICATION

(11) **EP 1 623 759 B1**
(45) Date of publication and mention of the grant of the patent: **20.02.2008**
(21) Application number: 04028408.5
(22) Date of filing: 01.12.2004
(51) Int. Cl.: B01L 3/00

(54) **Micro-plate and lid for robotic handling**
Mikroplatte und Deckel zur robotischen Handhabung
Micro-plat et couvercle pour la manipulation robotique

(30) Priority: 31.03.2004 US 557997 P; 17.09.2004 US 943687 P
(43) Date of publication of application: 08.02.2006
(73) Proprietor: Becton Dickinson and Company, Franklin Lakes, New Jersey 07417 (US)
(72) Inventor: Shanler, Michael S., Somerville, MA 02145 (US)
(74) Representative: von Kreisler Selting Werner

(56) References cited:
- US-A- 5 741 463
- US-A1- 2002 179 590
- US-B1- 6 323 035
- US-B1- 6 426 215
- US-B1- 6 486 401

## Description

### 1. Field of the Invention

The invention relates to an assembly of a micro-plate and a lid that can be manipulated by robotic stackers and/or by robotic arms.

### 2. Description of the Related Art

Many laboratory procedures require analysis to be performed on chemicals or biological specimens, such as tissue cultured cells, proteins and enzymes. The specimen maybe deposited in a liquid growth medium or buffer. An analysis then is performed after a specified time which will vary depending upon the nature of the biological specimen and the type of analysis that is to be performed.

The chemical or biological specimen often is deposited in a micro-plate. The plate may be moved from a first location where the specimen is deposited to a second location where the specimen is permitted to grow or otherwise develop over a specified time. The specimen then will be moved to another location for analysis.

The typical micro-plate for performing the above-described laboratory analysis is rectangular with a bottom wall, upstanding sidewalls and an open top. A lid may be mounted to the open top of the sidewalls to control evaporation. The footprint defined by the bottom wall of the plate generally is one of several standard sizes dimensioned to accommodate robotic handling equipment in a laboratory. Other characteristics of the plates, however, vary considerably from one manufacturer to another and from one type of analysis to another. One significant difference relates to the number of biological specimens that can be accommodated in the plate. For example, some plates define a single large reservoir in which tissue cultures may grow. Other laboratory analysis can be carried out with low volume assays. Thus, a single plate can accommodate a plurality of wells into which liquid and/or tissue cultures can be deposited. The plurality of wells typically are arranged in a rectangular matrix with formats that conform to standard formats for pipettes. For example, some standardized micro-plates include 2, 4, 8, 24, 96, 384, 1,536, 3456, or 4,080 wells.

A micro-plate with an appropriate number of wells can be molded unitarily in a dedicated mold for the particular number of wells. However, some micro-plates are formed from plural parts that are assembled together. For example, the micro-plate may include a unitary frame and a separate unitary well array with a pattern of wells. The well array with an appropriate number of wells is assembled to the standard frame.

The first part of claim 1 refers to a micro plate assembly disclosed in US-A-5,741,463. This assembly comprises a tray carrier positioned on a base plate, said tray carrier having upstanding walls for positioning a tube tray. The tube tray is a holder for inserting tubes that can be covered by a common gasket. A lid is provided to be fixed on the tray carrier for covering the tube tray and the gasket. The lid has a depending skirt that laterally encloses the upstanding walls of the tray carrier. This document mentions the possibility of handling the assembly by standardized equipment, such as automated well washers, automated scanning instruments and centrifuges.

Micro-plates often are stored in stacked arrays in the laboratory while the tissue or other biological material in the wells is permitted to grow. The micro-plates then are moved from the stacked array robotically and are transferred to appropriate work stations for analysis. There are two different approaches for robotically transferring the micro-plates from the stacked array to the work station for analysis. One option employs robotic gripping devices with grippers or fingers that grab opposite sides of the plates for transfer to a work station. Robotic grippers generally function to grab the top plate in a stacked array. The robotic grippers then lift the plate from the top of the stack and transfer the plate to the appropriate work station. Other laboratory devices stack the micro-plates in a magazine that permits the plates to be removed sequentially from the bottom of the stacked array. More particularly, the stack of plates may rest on two sets of solenoid controlled pins or levers that can retract and extend. Retraction of the pins releases the bottom plate in the array. The pins then extend to catch beneath the next plate, while the remaining stack of plates indexes down one position. The bottom plate is released onto an elevator lift that rises up from a location beneath the stacked array to engage the plate and to keep the plate aligned horizontally, thereby avoiding spills. The plate then is lowered by the elevator lift onto a shuttle that moves the plate to the appropriate work station.

Robotic grippers must have specialized features for contacting the plate. These features may include gripper pads, gripper points, gripper fingers or a serrated edge. These gripping features typically require smooth uninterrupted flat surfaces on the plate and/or the lid for proper engagement. Many plates can be handled efficiently by robotic grippers when the plate is stored independently of a lid. However, robotic grippers are likely to encounter gripping difficulties when the plate is being manipulated with the lid in place. More particularly, the known plate/lid assemblies are not configured for simultaneously gripping the lid and the plate in a manner that will hold the plate and lid in their assembled condition. There is the potential that the robotic gripper will grip only the lid or that the robotic gripper will grip portions of the lid below the topmost plate in a stacked array. Thus, many plates are stacked without lids to facilitate manipulation by robotic grippers. However, the absence of a lid significantly increases evaporation rates.

Robotic stackers that remove plates sequentially from a stacked array also encounter problems with lids. More specifically, the stacker is not well suited to distinguishing between a plate and a lid. Thus, the stacker may drop just the plate from the magazine, while retaining the lid for the dropped plate. The next cycle, then will drop the retained lid.

### SUMMARY OF THE INVENTION

It is an object of the invention to provide a plate assembly comprising a well plate and a lid, wherein the well plate and the lid can be gripped by robotic grippers, substantially simultaneously for lifting the plate assembly from the top of a stack of plate assemblies.

The plate assembly of the invention is defined by claim 1. Accordingly, it is characterized in that the well plate includes at least two opposed robotic gripper pads projecting from the base wall at locations aligned with the outer periphery of the base wall, and the lid includes robotic gripper pads substantially registered with the robotic gripper pads of the well plate, wherein the robotic gripper pads have a flat surface enabling engagement of robotic grippes.

In view of the above, it is a further object of the subject invention to provide a plate and lid assembly that is well suited to robotic handling by both robotic grippers and stackers.

A further object of the subject invention is to provide a plate and lid assembly that resists evaporation and facilitates robotic manipulation.

The invention is a well plate assembly that is suited for automated handling by robotic equipment. The assembly includes a well plate and a lid. The well plate includes a substantially rectangular base wall with opposite end edges and opposite side edges extending between the end edges. The end edges and the side edges of the base wall define a footprint conforming to a standard specified footprint for the laboratory equipment with which the assembly is to be used. The well plate further includes a well array that may be formed unitarily with the base wall. The well array includes at least one open-topped well for receiving liquid that will be subject to analysis in the laboratory. In many embodiments, the well array will include a rectangular matrix of open-topped wells, with the particular pattern of wells in the matrix conforming to the laboratory equipment with which the plate assembly is used. The well plate preferably includes a peripheral wall with opposite end walls spaced inwardly from the end edges of the base wall and opposite sidewalls spaced inwardly from the side edges of the base wall. The sidewalls meet the respective end walls at four corners. The end walls and/or the sidewalls preferably are formed with indentations for stacker compatibility. More particularly, the indentations are disposed to align with the solenoid indexing pins of the stacker.

The well plate includes robotic gripper pads that project up from the side edges and/or the end edges of the bottom wall. The robotic gripper pads define relatively large outer peripheral areas that can be engaged by robotic grippers for lifting the well plate assembly from the top of a stacked array of well plate assemblies.

The lid of the well plate assembly includes a top wall and a peripheral frame. The top wall may include a substantially planar center panel that is recessed with respect to at least portions of the peripheral frame. The center panel may be dimensioned and configured for support on the top of the well array so that the center panel of the top wall of the lid closes the open tops of the wells. The peripheral frame of the top wall is configured to rest on top edges of the peripheral wall of the well plate. The lid further includes a peripheral skirt configured to nest with the peripheral wall of the well plate. Thus, the peripheral skirt of the lid is formed with indentations that will nest with the indentations on the peripheral wall of the well plate. Accordingly, the indentations in the peripheral skirt of the lid will align with the solenoid indexing pins of the stacked.

The lid of the well plate assembly also includes robotic gripper pads that register with the robotic gripper pads that project up from the bottom wall of the well plate. Thus, the outer surfaces of the robotic gripper pads on the lid cooperate with outer surfaces of the robotic gripper pads of the well plate to define regions that may be engaged by robotic grippers.

A method for forming a well plate may include injection molding the well plate with a first mold plate corresponding to the base wall of the well plate and a plurality of second mold plates corresponding to a plurality of different well arrays. Each of the plurality of second mold plates is configured to form one of the specified matrices of wells compatible with laboratory equipment. The method comprises selecting an appropriate second mold plate for use with the first mold plate to achieve the appropriate matrix of wells. The first and second mold plates then are secured in opposed relationship to one another and a resin is injected into the cavity defined between the first mold plate and the selected second mold plate.

### BRIEF DESCRIPTION OF THE DRAWINGS

FIG. 1 is an exploded perspective view of a well plate and lid in accordance with the subject invention.

FIG. 2 is a perspective view of the well plate.

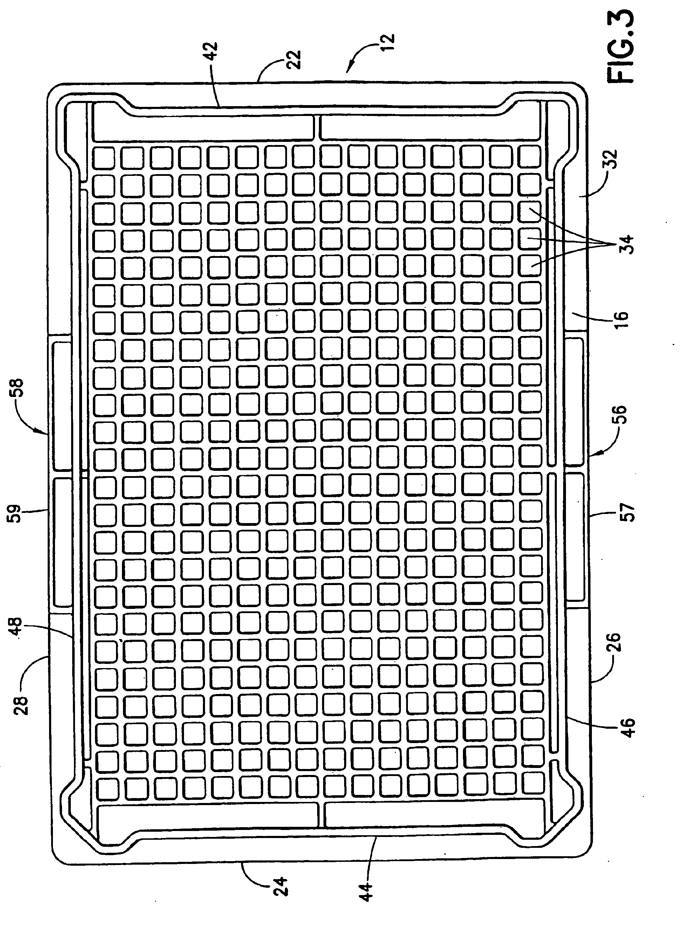

FIG. 3 is a top plan view of the well plate.

FIG. 4 is a prospective view of the well plate and lid in their assembled condition.

FIG. 5 is a cross-sectional view taken along line 5-5 in FIG. 4.

FIG. 6 is a cross-sectional view taken along line 6-6 in FIG. 4.

### DETAILED DESCRIPTION

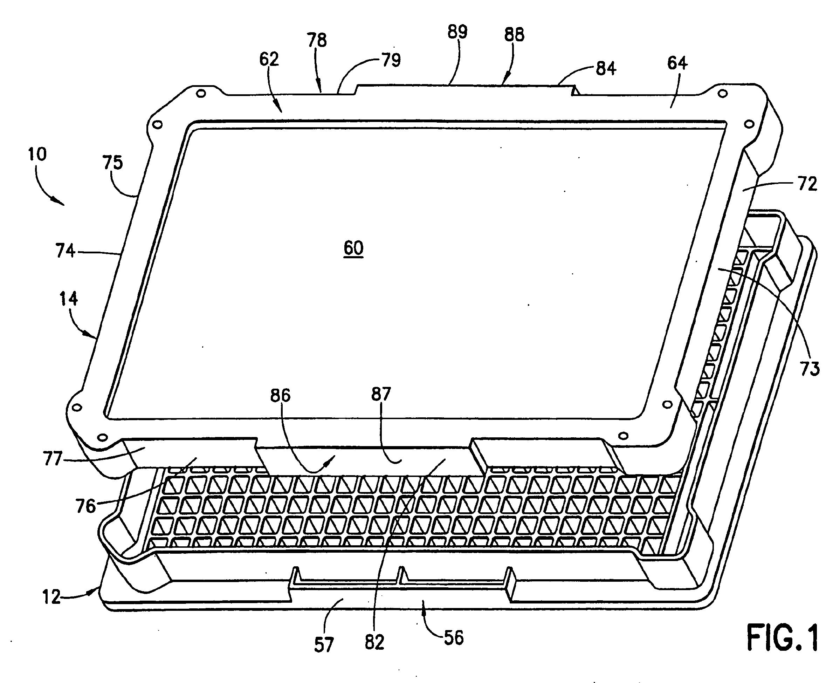

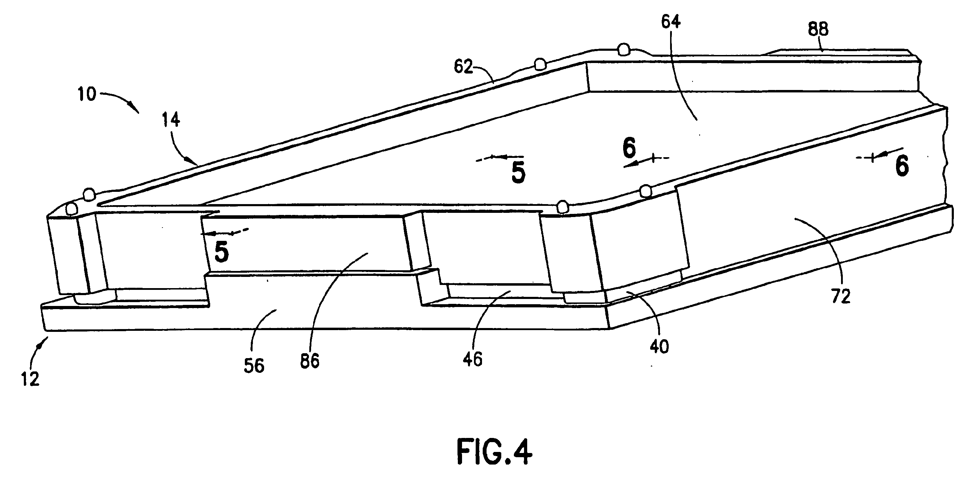

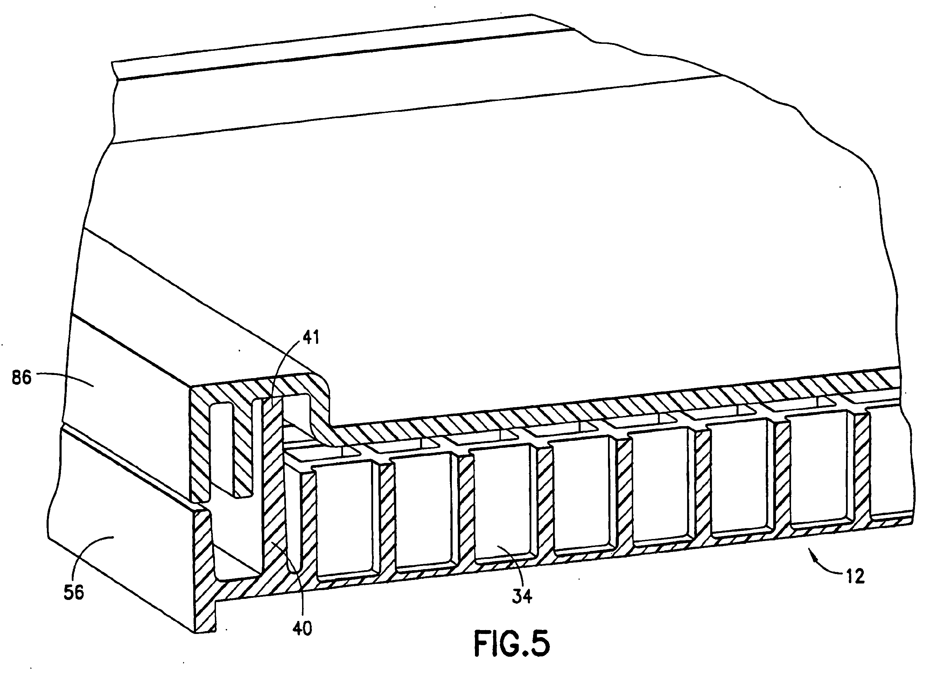

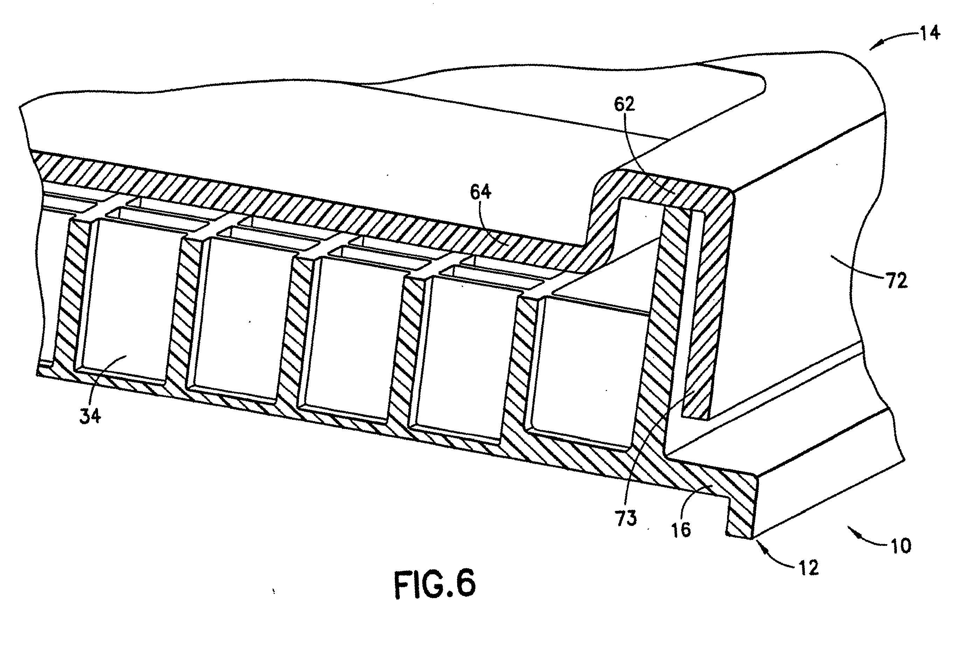

A plate assembly in accordance with the invention is identified generally by the numeral **10** in FIGS. 1 and 4-6. The plate assembly **10** includes a well plate **12** and a lid **14.**

The well plate **12** is molded unitarily from a resin material such as polypropylene, polystyrene cyclic olfin, or polycarbonate. Well plate **12** includes a substantially planar base wall **16** and a downwardly depending skirt **20.** Skirt **20** includes first and second substantially parallel ends **22** and **24** and first and second substantially parallel sides **26** and **28.** Ends **22** and **24** are of substantially equal length and are substantially linear. Sides **26** and **28** also are of substantially equal length and are substantially linear. However, sides **26** and **28** are longer than ends **22** and **24.** Thus, skirt **20** defines a substantially rectangular footprint for well plate **12.** The dimensions of the footprint defined by skirt **20** of well plate **12** are selected in accordance with standardized dimensions for multi-wall plates and the laboratory equipment with which such plates are used.

Well plate **12** is characterized further by a well array **30** formed unitarily with base wall **16.** Well array **30** is generally rectangular and is spaced inwardly from first and second ends **22** and **24** and first and second sides **26** and **28** of skirt **20.** Well array **30** includes a substantially planar top surface **32** aligned substantially parallel to base wall **16.** Top surface **32** of well array **30** is characterized by a plurality of upwardly open wells **34** that extend down toward base wall **16.** Wells **34** are arranged in well array **30** to define a substantially rectangular matrix. The number of wells **34** may vary depending upon the types of tests that will be carried out with plate assembly **10** and the types of laboratory equipment that will be employed to carry out such tests. However, the matrix of wells **34** typically will conform to a pattern of pipettes or other sample accommodating equipment. Thus, well array **30** may have 1; 2; 4; 8; 24; 96; 384; 1,536; 3,456; 4,080 or some other standardized number of wells **34.**

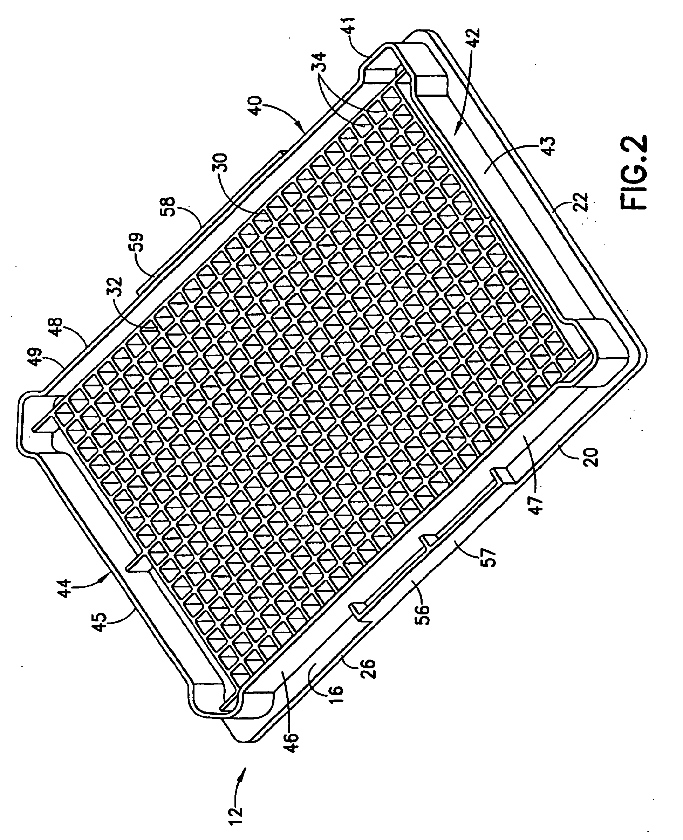

Well plate **12** further includes an outer peripheral sidewall **40** that extends perpendicularly up from base wall **16** at locations spaced outwardly from well array **30.** Peripheral sidewall **40** includes a top edge **41** that defines a plane aligned substantially parallel to top surface **32** of well array **30.** Top surface **32** of well array **30** is recessed relative to top edge **41** of peripheral sidewall **40** as shown most clearly in FIGS. 1, 2, 5 and 6. Peripheral sidewall **40** includes first and second end sections **42** and **44** respectively and first and second sidewall sections **46** and **48** respectively. End wall sections **42** and **44** and sidewall sections **46** and **48** are not linear. Rather, first end wall section **42** includes an indentation **43** disposed symmetrically thereon. Portions of first end wall section **42** defined by indentation **43** are spaced from first end **22** of peripheral skirt **20** by distance "a". In contrast, portions of end wall section **42** closer to sidewall sections **46** and **48** are spaced a distance "b" from first end edge **22.** Distance "a" exceeds distance "b".

Second end wall section **44** of peripheral side wall **40** is substantially symmetrical with first end wall section **42.** More particularly, second end wall section **44** includes a symmetrically disposed indentation **45.** First and second sidewall sections **46** and **48** also are characterized by symmetrically disposed indentations **47** and **49** respectively.

First end wall section **42** meets first and second sidewall sections **46** and **48** at well defined right angle corners. However, second end wall section **44** meets sidewall sections **46** and **48** at truncated corners to provide a rotational orientation for well plate **12.**

Multi-well tray **12** further includes first and second robotic gripper pads **56** and **58** that extend perpendicularly up from base wall **18** at locations aligned with first and second sides **26** and **28** of skirt **20.** Robotic gripper pads **56** and **58** have top edges that lie in a plane parallel to the plane defined by top edge **41** of outer peripheral sidewall **40** of well plate **12,** but disposed closer to base wall **16.** Robotic gripper pads **56** and **58** also have outer surfaces **57** and **59** respectively that are parallel to one another.

Lid **14** is formed unitarily from a resin material, and preferably the same material as well plate **12.** Lid **14** includes substantially planar central panel **60** and a peripheral frame **62.** Peripheral frame **62** has a top wall **64** that is parallel to central panel **60** but offset upwardly from central panel **60.** Peripheral frame **62** also includes a skirt **66** that depends down from top wall **64** for telescoping over peripheral sidewall **40** of well plate **12.** Frame **62** is configured so that top wall **64** can rest on and closely engage top edge **41** of peripheral sidewall **40** of well plate **12** to control evaporation of liquid from well array **30.** Additionally, skirt **66** extends from top wall **64** of frame **62** a distance less than the height of peripheral sidewall **40** of well plate **12.** Thus, skirt **66** will not touch base wall **16** of well plate **12,** and top wall **64** is assured of sealing against top edge **41** of peripheral side wall **40.** In this embodiment, central panel **60** does not rest on top surface **32** of well array **30** to seal individual wells **34.** However, other embodiments may have a lid configured to close each well **34.** Skirt **66** includes first and second end walls **72** and **74** and first and second sidewalls **76** and **78.** First and second end walls **72** and **74** are formed respectively with indentations **73** and **75** that nest with indentations **43** and **45** of peripheral sidewall **40** of well plate **12.** Similarly, first and second sidewalls **76** and **78** are formed with indentations that nest respectively with indentations **47** and **49** of peripheral sidewall **40** of well plate **12.** Indentations **73, 75, 77** and **79** are disposed at locations that will align with the solenoid pins of a robotic stacker so that plate assembly **10** can be dropped efficiently from the bottom of a stacked array without separating lid **14** from well plate **12.**

Lid **14** further includes robotic gripper pads **86** and **88** that project from frame **62.** More particularly, robotic gripper pads **86** and **88** extend down from the plane defined by top wall **64** of frame **62.** Robotic gripper pads **86** and **88** have outer surfaces **87** and **89** that align respectively that with outer surfaces **57** and **59** of robotic gripper pads **56** and **58** on well plate **12.** Additionally, robotic gripper pads **86** and **88** are dimensioned to be spaced slightly from the top edges of robotic gripper pads **52** and **54** when lid **14** rests on well plate **12.** Outer surfaces **87** and **89** of robotic gripper pads **86** and **88** can be gripped by robotic grippers substantially simultaneously with outer surfaces **57** and **59** of robotic gripper pads **56** and **58** for lifting plate assembly **10** from the top of a stack of such plate assemblies.

The number of wells required for a well plate vary substantially based on the volume of liquid required for a particular laboratory test and in accordance with the specifications of the laboratory equipment. As noted above, the number of wells employed on well plates vary from 1 to 4,080 in accordance with certain established standards. Some well plates are manufactured by molding an appropriate well array and then mounting the molded well array to a base that has a uniform footprint. The mounting can be by purely mechanical means, such as a snap fit or by application of adhesive or ultrasonic welding. Other well plates are manufactured by dedicated mold pairs that unitarily mold a well plate of appropriate dimensions. The well plate **12** of the subject invention preferably is molded with a first mold defining a standard base wall **16** and a mating second mold defining a standard periphery wall **40** of the well plate **12.** Additionally, the mold assembly includes a plurality of mold inserts, any one of which can be mounted in the mating second mold for forming a well array **30** with an appropriate number of wells **34.** Thus, post-molding assembly steps can be avoided and molding equipment can be adapted at low cost for producing plate assemblies **10** with a specified number of wells **34** with a substantially reduced cost, as compared to costs associated with dedicated molds.

Plate assembly **10** is employed by depositing liquid specimens into wells **34** of well array **30** by robotic equipment that employs an array of pipettes corresponding in number and location to wells **34.** Lid **14** then is telescoped onto well plate **14.** In this mounted condition, top wall **64** of frame **62** will rest on top edge **41** of peripheral end wall **40** of well plate **12** to substantially seal wells **34** to prevent or minimize evaporation. Indentations **73, 75, 77** and **79** of lid **14** will nest with indentation **43, 45, 47** and **49** of well array **30** and will be spaced inwardly from edges **22, 24, 26** and **28** of skirt **20** of well plate **12.** Additionally, robotic gripper pads **86** and **88** of lid **14** will align with robotic gripper pads **56** and **58** of well plate **12.** Outer surfaces **87** and **89** of robotic gripper pads **86** and **88** will align with outer surfaces **57** and **59** of robotic gripper pads **56** and **58** on well plate **12.**

Plate assemblies **10** may be stacked in a laboratory for a selected time while biological samples in the respective wells **34** are permitted to grow or react. Plate assemblies **10** then can be removed sequentially from the bottom of a stacked array by actuation of solenoid pins of a robotic stacker. More particularly, the pins will align with the indentations **73, 75, 77** and/or **79.** The pins will retract sufficiently to allow well plate assembly **10** to drop onto the elevator lift of the robotic stacker. The pins then will quickly extend to engage the next lowest well plate assembly **10.** The indentations **73, 75, 77** and **79** ensure that the pins will engage the next sequential plate assembly **10** without separating lid **14** from its respective well plate **12.** The ability to stack and process well plates **12** with lids **14** in position substantially reduces evaporation. Assemblies **10** also can be used with robotic grippers that function to engage robotic gripper pads **56, 58, 86** and **88** from opposed sides of assembly **10** for lifting and transporting assembly **10** to a location for analysis.

## Claims

1. A plate assembly comprising:
a well plate (12) having a substantially rectangular base wall(16) with a top surface and an outer periphery, a well array (30) extending up from said top surface of said base wall and disposed inwardly from said outer periphery of said base wall, said well array (30) having at least one upwardly open well (34), a peripheral wall (40) projecting up from said top surface of said base wall (16) and extending around said well array(30), at least selected portions (43) of said peripheral wall (40) being spaced inwardly from said outer periphery of said base wall (16); and
a lid (14) mounted on said well plate (12) and having a peripheral skirt (66) telescoped over said peripheral wall (40) of said well plate, at least portions (73,75) of said peripheral skirt (66) of said lid being spaced inwardly from said outer periphery of said base wall,
**characterized in that**
said well plate (12) includes at least two opposed robotic gripper pads (56, 58) projecting up from said base wall (16) at locations aligned with the outer periphery of said base wall, and said lid (14) includes robotic gripper pads (86, 88) substantially registered with said robotic gripper pads (56, 58) of said well plate,
said robotic gripper pads having flat surfaces enabling engagement of robotic grippers.

2. The assembly of claim 1, wherein each robotic gripper pad (56, 58) of said well plate (12) is substantially coplanar with one of said robotic gripper pads (86, 88) of said lid (14).

3. The assembly of claim 1, wherein said at least one well (34) comprises a plurality of wells. .

4. The assembly of claim 1, wherein at least portions of the top surface of the base wall (16) between said outer periphery of said base wall and said peripheral wall (40) define a plane, said well array (30) having a top surface (32) defining a plane substantially parallel to said plane of said top surface of said base wall (16).

5. The assembly of claim 4, wherein said peripheral wall (40) of said well plate (12) includes a top edge (41) substantially parallel to said top surface (32) of said well array (30).

6. The assembly of claim 1, wherein the said outer periphery of said base wall of said well plate (12) includes a pair of parallel sides (46, 48) and a pair of parallel ends (42, 44), said peripheral wall(40) of said well plate (12) having side sections (46, 48) spaced inwardly from said sides of said base wall and end sections (42, 44) spaced inwardly from said ends of said base wall (16), said side sections (46, 48) of said peripheral wall each including at least one indentation (47, 49) indented further from said outer periphery of said base wall (16) than portions of said peripheral wall (40) spaced from said indentations.

7. The assembly of claim 6, wherein said end sections (42, 44) of said peripheral wall (40) each include an indentation (43, 45) indented further from said outer periphery of said base wall (16) than portions of said end sections (42, 44) spaced from said indentations (47, 49).

8. The assembly of claim 1, wherein said lid (14) includes a top wall (64) adjacent said peripheral skirt (66), said top wall being engaged with top edges (41) of said peripheral wall (40) of said well plate (12) for substantially sealing said well array and limiting evaporation.

9. The plate assembly of claim 1, wherein said peripheral skirt (66) of said lid (14) is spaced from said base wall (16) of said well plate (12).

10. The plate assembly of claim 1, wherein said well array (30) and said peripheral wall (40) are molded unitarily with said base wall (16) of said well plate (12).

11. The assembly of claim 1, wherein said peripheral wall (40) includes indentations (43, 45, 47, 49) spaced inwardly of the outer periphery of said base wall (16), and said lid includes a peripheral skirt (66) nested with at least portions of said peripheral wall (40) of said well plate (12), said peripheral skirt of said lid including indentations (73, 75, 77, 79) nested with said indentations (43, 45, 47, 49) of said peripheral wall (40) of said well plate (12) and spaced inwardly from said outer periphery of said wall (16) of said well plate (12), said lid (14) further including at least two opposed robotic gripper pads (86, 88) substantially aligned with said robotic gripper pads (56, 58) of said well plate.

12. The plate assembly of claim 11, wherein said robotic gripper pads (56, 58; 86, 88) of said well plate (12) and of said lid (14) are substantially registered with said sides (26, 28) of said outer periphery of said well plate (12).

13. The plate assembly of claim 11, wherein said indentations (43-49; 73-79) include indentations in said peripheral wall (40) of said well plate (12) and in said peripheral skirt (66) of said lid (14) such that said robotic gripper pads each are between a pair of said indentations.

14. The plate assembly of one of claims 1 - 13, wherein the robotic gripper pads (56, 58) of said well plate are spaced from said robotic gripper pads (86, 88) of said lid a sufficient distance to ensure that said lid (14) is seated securely on the top edge (41) of said peripheral wall (40) of said well plate (12).

15. The plate assembly of claim 14, wherein said skirt of said lid (14) is spaced from said base wall(16) of said well plate to ensure that said lid is seated securely on said top edge (41) of said peripheral wall (40) of said well plate (12).

16. The plate assembly of claim 11, wherein said peripheral wall (40) and said well array (30) are molded unitarily with said base wall (16).

## Patentansprüche

1. Plattenanordnung mit:
einer Muldenplatte (12), die eine im Wesentlichen rechteckige Basis-wand (16) mit einer oberen Fläche und einem Außenumfang aufweist, einem Muldenarray (30), das von der oberen Fläche der Basiswand nach unten ragt und einwärts von dem Außenumfang der Basiswand angeordnet ist, wobei das Muldenarray (30) mindestens eine nach oben offene Mulde (34) aufweist, eine Umfangswand (40) von der oberen Fläche der Basiswand (16) vorsteht und um das Muldenarray (30) verläuft und zumindest ausgewählte Teile (43) der Umfangswand (40) einwärts von dem Außenumfang der Basiswand (16) beabstandet sind; und
einem Deckel (14), der an der Muldenplatte (12) angebracht ist und eine teleskopartig über der Umfangswand (40) der Muldenplatte angeordnete Umfangseinfassung (66) aufweist, wobei zumindest Teile (73,75) der Umfangeinfassung (66) des Deckels einwärts von dem Außenumfang der Basiswand beabstandet sind,
**dadurch gekennzeichnet, dass**
die Muldenplatte (12) mindestens zwei einander gegenüberliegende Roboter-Greifer-Pads (56,58) aufweist, die an Stellen, welche mit dem Außenumfang der Basiswand ausgerichtet sind, von der Basiswand (16) nach oben vorstehen, und der Deckel (14) Roboter-Greifer-Pads (86, 88) aufweist, die mit den Roboter-Greifer-Pads (56,58) der Muldenplatte im Wesentlichen deckungsgleich sind,
wobei die Roboter-Greifer-Pads ebene Flächen aufweisen, die ein Angreifen an den Roboter-Greifern ermöglichen.

2. Anordnung nach Anspruch 1, bei der jedes Roboter-Greifer-Pad (56,58) der Muldenplatte (12) mit einem der Roboter-Greifer-Pads (86,88) des Deckels (14) im Wesentlichen koplanar ist.

3. Anordnung nach Anspruch 1, bei der die mindestens eine Mulde (34) mehrere Mulden aufweist.

4. Anordnung nach Anspruch 1, bei der zumindest Teile der oberen Fläche der Basiswand (16) zwischen dem Außenumfang der Basiswand und der Umfangswand (40) eine Ebene bilden, wobei das Muldenarray (30) eine obere Fläche (32) aufweist, die eine zu der Ebene der oberen Fläche der Basiswand (16) im Wesentliche parallele Ebene bildet.

5. Anordnung nach Anspruch 4, bei der die Umfangswand (40) der Muldenplatte (12) einen oberen Rand (41) aufweist, der zu der oberen Fläche (32) des Muldenarray (30) im Wesentlichen parallel verläuft.

6. Anordnung nach Anspruch 1, bei der der Außenumfang der Basiswand der Muldenplatte (12) zwei parallele Seiten (46,48) und zwei parallele Enden (42,44) aufweist, wobei die Umfangswand (40) der Muldenplatte (12) Seitenbereiche (46,48), die einwärts von den Seiten der Basiswand beabstandet sind, und Endbereiche (42,44) aufweist, die einwärts von den Enden der Basiswand (16) beabstandet sind, wobei die Seitenbereiche (46,48) der Umfangswand jeweils mindestens eine Vertiefung (47,49) aufweisen, die weiter von dem Außenumfang der Basiswand (16) weg vertieft ist als von den Vertiefungen beabstandete Teile der Umfangswand (40).

7. Anordnung nach Anspruch 6, bei der die Endbereiche (42,44) der Umfangswand (40) jeweils eine Vertiefung (43,45) aufweisen, die weiter von dem Außenumfang der Basiswand (16) weg vertieft ist als von den Vertiefungen (47,49) beabstandete Teile der Endbereiche (42,44).

8. Anordnung nach Anspruch 1, bei der der Deckel (14) eine obere Wand (64) benachbart zu der Umfangseinfassung (66) aufweist, wobei die obere Wand mit oberen Rändern (41) der Umfangswand (40) der Muldenplatte (12) zusammengreift, um das Muldenarray im Wesentlichen abzudichten und eine Evaporation zu begrenzen.

9. Plattenanordnung nach Anspruch 1, bei der die Umfangseinfassung (66) des Deckels (14) von der Basiswand (16) der Muldenplatte (12) beabstandet ist.

10. Plattenanordnung nach Anspruch 1, bei der das Muldenarray (30) und die Umfangswand (40) einstückig mit der Basiswand (16) der Muldenplatte (12) ausgebildet sind.

11. Anordnung nach Anspruch 1, bei der die Umfangswand (40) einwärts von dem Außenumfang der Basiswand (16) beabstandete Vertiefungen (43,45,47,49) aufweist und der Deckel eine zumindest mit Teilen der Umfangswand (40) der Muldenplatte (12) genestete Umfangseinfassung (66) aufweist, wobei die Umfangseinfassung des Deckels Vertiefungen (73,75,77,79) aufweist, die mit den Vertiefungen (43,45,47,49) der Umfangswand (40) der Muldenplatte (12) genestet sind und einwärts von dem Außenumfang der Wand (16) der Muldenplatte (12) beabstandet sind, wobei der Deckel (14) ferner mindestens zwei einander gegenüberliegende Roboter-Greifer-Pads (86,88) aufweist, die mit den Roboter-Greifer-Pads (56,58) der Muldenplatte im Wesentlichen ausgerichtet sind.

12. Plattenanordnung nach Anspruch 11, bei der die Roboter-Greifer-Pads (56,58;86,88) der Muldenplatte (12) und des Deckels (14) mit den Seiten (26,28) des Außenumfangs der Muldenplatte (12) im Wesentlichen deckungsgleich sind.

13. Plattenanordnung nach Anspruch 11, bei der die Vertiefungen (43-49; 73-79) Vertiefungen in der Umfangswand (40) der Muldenplatte (12) und in der Umfangseinfassung (66) des Deckels (14) aufweisen, so dass die Roboter-Greifer-Pads jeweils zwischen einem Vertiefungspaar angeordnet sind.

14. Plattenanordnung nach einem der Ansprüche 1-13, bei der die Roboter-Greifer-Pads (56,58) der Muldenplatte von den Roboter-Greifer-Pads (86,88) des Deckels über eine ausreichende Distanz beabstandet sind, um sicherzustellen, dass der Deckel (14) fest auf dem oberen Rand (41) der Umfangswand (40) der Muldenplatte (12) sitzt.

15. Plattenanordnung nach Anspruch 14, bei der die Umfassung des Deckels (14) von der Basiswand (16) der Muldenplatte beabstandet ist, um sicherzustellen, dass der Deckel fest auf dem oberen Rand (41) der Umfangswand (40) der Muldenplatte (12) sitzt.

16. Plattenanordnung nach Anspruch 11, bei der die Umfangswand (40) und das Muldenarray (30) einstückig mit der Basiswand (16) ausgebildet sind.

## Revendications

1. Ensemble de plaque comprenant :
une plaque à alvéoles (12) ayant une paroi de base sensiblement rectangulaire (16) avec une surface supérieure et une périphérie externe, un ensemble d'alvéoles (30) s'étendant depuis ladite surface supérieure de ladite paroi de base et disposé vers l'intérieur depuis ladite périphérie externe de ladite paroi de base, ledit ensemble d'alvéoles (30) ayant au moins une alvéole ouverte vers le haut (34), une paroi périphérique (40) faisant saillie depuis ladite surface supérieure de ladite paroi de base (16) et s'étendant autour dudit ensemble d'alvéoles (30), au moins des parties sélectionnées (43) de ladite paroi périphérique (40) étant espacées vers l'intérieur de ladite périphérie externe de ladite paroi de base (16) ; et
un couvercle (14) monté sur ladite plaque à alvéoles (12) et ayant une jupe périphérique (66) télescopée sur ladite paroi périphérique (40) de ladite plaque à alvéoles, au moins des parties (73, 75) de ladite jupe périphérique (66) dudit couvercle étant espacées vers l'intérieur depuis ladite périphérie externe de ladite paroi de base,
**caractérisé en ce que**
ladite plaque à alvéoles (12) comprend au moins deux patins d'accroche de robot opposés (56, 58) faisant saillie depuis ladite paroi de base (16) au niveau d'emplacements alignés avec la périphérie externe de ladite paroi de base, et ledit couvercle (14) comprend des patins d'accroche de robot (86, 88) coïncidant sensiblement avec lesdits patins d'accroche de robot (56, 58) de ladite plaque à alvéoles,
lesdits patins d'accroche de robot ayant des surfaces plates permettant l'engagement des pinces de robot.

2. Ensemble selon la revendication 1, dans lequel chaque patin d'accroche de robot (56, 58) de ladite plaque à alvéoles (12) est sensiblement coplanaire avec l'un desdits patins d'accroche (86, 88) dudit couvercle (14).

3. Ensemble selon la revendication 1, dans lequel ladite au moins une alvéole (34) comprend une pluralité d'alvéoles.

4. Ensemble selon la revendication 1, dans lequel au moins des parties de la surface supérieure de la paroi de base (16) entre ladite périphérie externe de ladite paroi de base et ladite paroi périphérique (40) définissent un plan, ledit ensemble d'alvéoles (30) ayant une surface supérieure (32) définissant un plan sensiblement parallèle audit plan de ladite surface supérieure de ladite paroi de base (16).

5. Ensemble selon la revendication 4, dans lequel ladite paroi périphérique (40) de ladite plaque à alvéoles (12) comprend un bord supérieur (41) sensiblement parallèle à ladite surface supérieure (32) dudit ensemble d'alvéoles (30).

6. Ensemble selon la revendication 1, dans lequel ladite périphérie externe de ladite paroi de base de ladite plaque à alvéoles (12) comprend une paire de côtés parallèles (46, 48) et une paire d'extrémités parallèles (42, 44), ladite paroi périphérique (40) de ladite plaque à alvéoles (12) ayant des sections latérales (46, 48) espacées vers l'intérieur depuis lesdits côtés de ladite paroi de base et des sections d'extrémité (42, 44) espacées vers l'intérieur depuis lesdites extrémités de ladite paroi de base (16), lesdites sections latérales (46, 48) de ladite paroi périphérique comprenant chacune au moins une indentation (47, 49) formée plus loin de ladite périphérie externe de ladite paroi de base (16) que des parties de ladite paroi périphérique (40) espacée desdites indentations.

7. Ensemble selon la revendication 6, dans lequel lesdites sections d'extrémité (42, 44) de ladite paroi périphérique (40) comprennent chacune une indentation (43, 45) formée plus loin de ladite périphérie externe de ladite paroi de base (16) que des parties desdites sections d'extrémité (42, 44) espacées desdites indentations (47, 49).

8. Ensemble selon la revendication 1, dans lequel ledit couvercle (14) comprend une paroi supérieure (64) adjacente à ladite jupe périphérique (66), ladite paroi supérieure étant engagée avec les bords supérieurs (41) de ladite paroi périphérique (40) de ladite plaque à alvéoles (12) pour assurer sensiblement l'étanchéité dudit ensemble d'alvéoles et limiter l'évaporation.

9. Ensemble de plaque selon la revendication 1, dans lequel ladite jupe périphérique (66) dudit couvercle (14) est espacée de ladite paroi de base (16) de ladite plaque à alvéoles (12).

10. Ensemble de plaque selon la revendication 1, dans lequel ledit ensemble d'alvéoles (30) et ladite paroi périphérique (40) sont moulés de manière unitaire avec ladite paroi de base (16) de ladite plaque à alvéoles (12).

11. Ensemble selon la revendication 1, dans lequel ladite paroi périphérique (40) comprend des indentations (43, 45, 47, 49) espacées vers l'intérieur de ladite périphérique externe de ladite paroi de base (16), et ledit couvercle comprend une jupe périphérique (66) emboîtée avec au moins des parties de ladite paroi périphérique (40) de ladite plaque à alvéoles (12), ladite jupe périphérique dudit couvercle comprenant des indentations (73, 75, 77, 79) emboîtées avec lesdites indentations (43, 45, 47, 49) de ladite paroi périphérique (40) de ladite plaque à alvéoles (12) et espacées vers l'intérieur depuis ladite périphérie externe de ladite paroi (16) de ladite plaque à alvéoles (12), ledit couvercle (14) comprenant en outre au moins deux patins d'accroche de robot opposés (86, 88) sensiblement alignés avec lesdits patins d'accroche de robot (56, 58) de ladite plaque à alvéoles.

12. Ensemble de plaque selon la revendication 11, dans lequel lesdits patins d'accroche de robot (56, 58 ; 86, 88) de ladite plaque à alvéoles (12) et dudit couvercle (14) coïncident sensiblement avec lesdits côtés (26, 28) de ladite périphérie externe de ladite plaque à alvéoles (12).

13. Ensemble de plaque selon la revendication 11, dans lequel lesdites indentations (43-49 ; 73-79) comprennent des indentations dans ladite paroi périphérique (40) de ladite plaque à alvéoles (12) et dans ladite jupe périphérique (66) dudit couvercle (14) de sorte que lesdits patins d'accroche de robot se trouvent chacun entre une paire desdites indentations.

14. Ensemble de plaque selon l'une des revendications 1 à 13, dans lequel les patins d'accroche de robot (56, 58) de ladite plaque à alvéoles sont espacés desdits patins d'accroche de robot (86, 88) dudit couvercle selon une distance suffisante pour assurer que ledit couvercle (14) soit disposé de manière sûre sur le bord supérieur (41) de ladite paroi périphérique (40) de ladite plaque à alvéoles (12).

15. Ensemble de plaque selon la revendication 14, dans lequel ladite jupe dudit couvercle (14) est espacée de ladite paroi de base (16) de ladite plaque à alvéoles pour assurer que ledit couvercle soit disposé de manière sûre sur ledit bord supérieur (41) de ladite paroi périphérique (40) de ladite plaque à alvéoles (12).

16. Ensemble de plaque selon la revendication 11, dans lequel ladite paroi périphérique (40) et ledit ensemble d'alvéoles (30) sont moulés de manière unitaire avec ladite paroi de base (16).
